(19) 

Europäisches
Patentamt

European
Patent Office

Office européen
des brevets

(11)     **EP 2 088 768 B1**

(12)     **EUROPEAN PATENT SPECIFICATION**

(45) Date of publication and mention
of the grant of the patent:
**12.09.2018  Bulletin 2018/37**

(51) Int Cl.:
***H04N 5/232*** *(2006.01)*

(21) Application number: **09001542.1**

(22) Date of filing: **04.02.2009**

(54) **Imaging apparatus, storage medium storing program and imaging method**

Abbildungsvorrichtung, auf einem Speichermedium gespeichertes Programm und Abbildungsverfahren

Appareil d'imagerie, support de stockage stockant le programme et procédé d'imagerie

(84) Designated Contracting States:
**DE FR GB**

(30) Priority: **08.02.2008   JP 2008029194**
**30.09.2008   JP 2008253601**

(43) Date of publication of application:
**12.08.2009   Bulletin 2009/33**

(73) Proprietor: **Casio Computer Co., Ltd.**
**Tokyo 151-8543 (JP)**

(72) Inventors:
• **Makino, Tetsuji**
**Hamura-shi**
**Tokyo 205-8555 (JP)**

• **Matsui, Shinichi**
**Hamura-shi**
**Tokyo 205-8555 (JP)**

(74) Representative: **Grünecker Patent- und**
**Rechtsanwälte**
**PartG mbB**
**Leopoldstraße 4**
**80802 München (DE)**

(56) References cited:
**EP-A1- 1 874 043      WO-A1-2007/049432**
**WO-A2-2007/004207    JP-A- 2000 125 290**
**JP-A- 2007 213 191    US-A1- 2003 151 672**

**Description**

BACKGROUND OF THE INVENTION

1. Field of the Invention

The present invention relates to an imaging apparatus, a storage medium storing a program and an imaging method.

2. Description of Related Art

Heretofore, various techniques are proposed in an area of imaging apparatus so as to take an image of an object without camera shake.

For example, a technique is developed to judge camera shake by detecting a change of angle of view in a state of displaying images on live, and takes an image at a time when no change of angle of view is detected.

However, although the device can prevent camera shake arisen from photographer's hands shaking, it was impossible to control taking images considering even a slight movement of an object.

US 2003/0151672 A1 relates to an image capturing device having an image sensor, a memory and a processor; wherein the memory includes a motion detect routine, a predetermined image interval and a predetermined motion threshold; wherein the processor performs the capturing of images separated by the predetermined image interval, compares a current image to one or more previous images, determines when motion between the current image and the previous image is below the predetermined motion threshold and stores the current image as a final image.

WO 2007/004207 A2 discloses a digital camera apparatus comprising a digital imaging device, a noise reduction processor and an image aligner.

JP 2007 213191 A relates to a motion detection method, wherein a plurality of images are continuously imaged, the image data and parameter for imaging are captured, judging threshold value is determined based on the parameter for imaging, and a motion area is judged by comparing the judging threshold value with a difference of a plurality of the images.

EP 1 874 043 A1 discloses an image device including an imaging optical system, an imaging sensor, a motion detecting unit and a microcomputer.

SUMMARY OF THE INVENTION

It is, therefore, a main object of the present invention to provide an imaging apparatus, a storage medium storing a program and imaging method, which are capable of controlling taking images considering movement of an object.

According to a first aspect of the present invention, there is provided an imaging apparatus according to claim 1.

According to a second aspect of the present invention, there is provided a storage medium according to claim 9.

According to a third aspect of the present invention, there is provided a method according to claim 10.

Further, advantageous embodiments are defined in dependent claims 2 to 8.

Brief Description of the Drawings

The above and other objects, advantages and features of the present invention will become more fully understood from the detailed description given hereinbelow and the appended drawings which are given by way of illustration only, and thus are not intended as a definition of the limits of the present invention, and wherein:

FIG. 1 is a block diagram showing a skeleton framework of an imaging apparatus according to a first embodiment of the present invention;
FIG. 2 is a view showing a frame format of a program memory of the imaging apparatus shown in FIG. 1;
FIG. 3A is a view explaining a processing for calculating an evaluated value;
FIG. 3B is a view explaining a processing for calculating the evaluated value;
FIG. 3C is a view explaining a processing for calculating the evaluated value;
FIG. 4A is a view showing a frame format of an area of a previous image frame according to the processing for calculating the evaluated value;
FIG. 4B is a view showing a frame format of an area of a present image frame according to the processing for calculating the evaluated value;
FIG. 5 is a view showing a frame format of a table for setting threshold value stored in the program memory shown in FIG. 2;

FIG. 6 is a flowchart showing an example of a behavior according to an automatic imaging processing;

FIG. 7 is a flowchart showing continuation of the automatic imaging processing shown in FIG. 6;

FIG. 8 is a view showing a frame format of a program memory of an imaging apparatus according to a second embodiment of the present invention;

FIG. 9 is a view explaining an automatic imaging processing by the imaging apparatus shown in FIG. 8;

FIG. 10 is a flowchart showing an example of a behavior according to an automatic imaging processing shown in FIG. 9; and

FIG. 11 is a flowchart showing continuation of the automatic imaging processing shown in FIG. 10.

## DESCRIPTION OF THE PREFERRED EMBODIMENTS

In the following, the best modes for implementing the present invention are described with reference to the attached drawings. While various technically preferable features are described below, the scope of the invention is not limited to the following embodiments and illustrated examples.

First embodiment

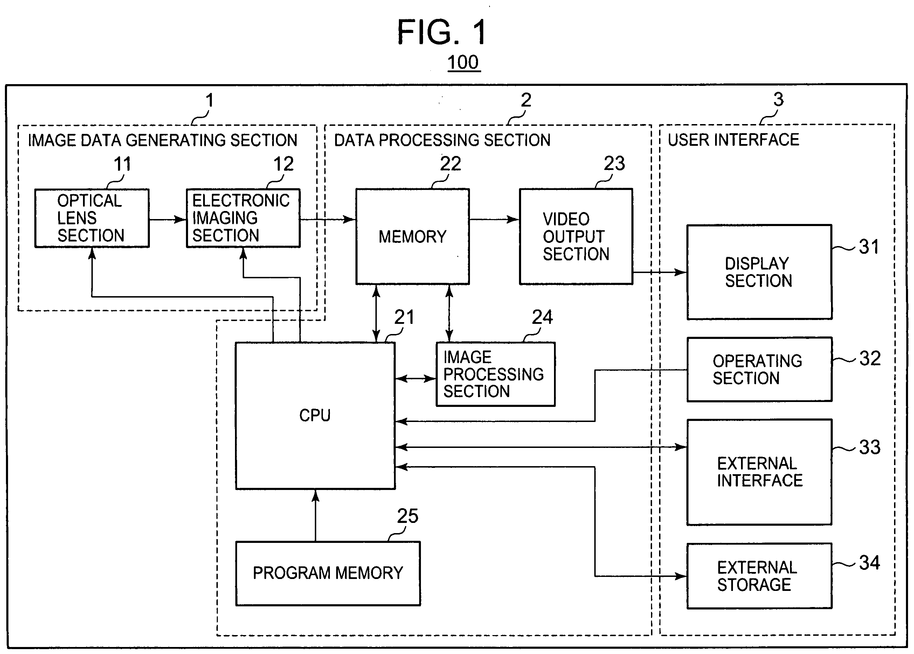

Fig. 1 is a block diagram showing a skeleton framework of an imaging apparatus 100 according to a first embodiment of the present invention.

The imaging apparatus 100 evaluates a pixel value of each pixels included in each of a plurality of blocks B, ... of each of a plurality of areas i, ..., which are generated by dividing an object image G1, and calculates a mean value of the pixel values by the blocks B. Then, the imaging apparatus 100 calculates a correlation degree of each of the areas i respectively corresponding to the images of object images G1 on the basis of the evaluated value of each of the areas i included in the object image G1. Then, the imaging apparatus 100 controls execution of storing image data of the object image G1 by judging whether an object is in a state of stopping or not based on a calculated correlation degree of each of the areas i.

To put it concretely, as shown in Fig. 1, the imaging apparatus 100 includes an image data generating section 1, a data processing section 2 and a user interface 3.

The image data generating section 1 configures an imaging section. The image data generating section 1 is driven under the control of a CPU 21 and sequentially generates a plurality of image frames (image data) regarding the object image G1 by sequentially taking images of an object. In particular, the image data generating section 1 includes an optical lens section 11 and an electronic imaging section 12.

The optical lens section 11 includes a plurality of imaging lens or the like, which form an optical image of an object. Moreover, the optical lens section 11 is driven under the control of the CPU 21 and performs operations such as focusing and/or zooming. Incidentally, the optical lens section 11 includes various control circuits regarding, for example, focusing, exposing and white balancing or the like, which are not shown.

The electronic imaging section 12 is composed of a Charge Coupled Device (CCD) or a Complementary Metal-Oxide Semiconductor (CMOS) or the like, which converts optical images of an object formed by the optical lens section 11 into a two-dimensional image signal. Moreover, the image signal (image frame) stored in an imaging area of the electronic imaging section 12 is readout by a predetermined frame rate under the control of the CPU 21.

Incidentally, the image data generating section 1 can perform a low-resolution image shooting for preview images and a high-resolution image shooting for storing images (images to be stored).

The low-resolution image shooting is a shooting, in which a resolution of an image is, for example, about 640 times 480 pixels (VGA). In this low-resolution image shooting, although the resolution thereof is low, the imaging apparatus 100 can take a moving image or readout an image at a speed of 30 fps (frames per second).

The high-resolution image shooting is a shooting, in which, for example, all pixels in the imaging area of the electronic imaging section 12 that are available for taking an image are used.

The data processing section 2 includes the CPU 21, a memory 22, a video output section 23, an image processing section 24 and a program memory 25.

The CPU 21 performs various control operations according to various control programs, which are stored in the program memory 25, for the imaging apparatus 100.

The memory 22 temporarily stores image data generated by the image data generating section 1. Moreover, the memory 22 stores various data or various flags for image processing.

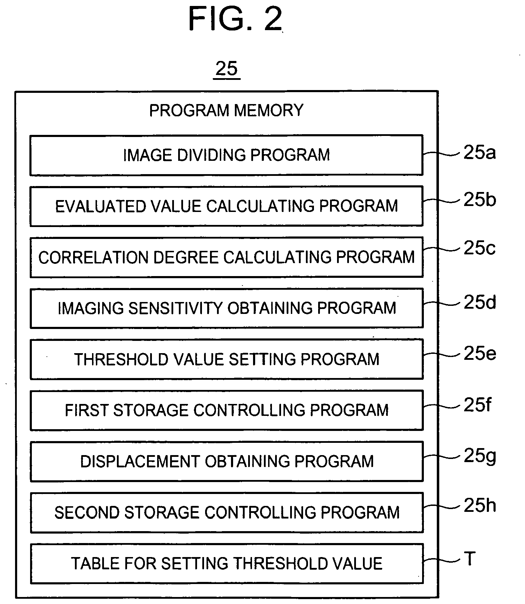

The program memory 25 stores various programs or data that are necessary for the CPU 21 to be operated. To put it concretely, the program memory 25 stores, as shown in FIG. 2, an image dividing program 25a, an evaluated value calculating program 25b, a correlation degree calculating program 25c, an imaging sensitivity obtaining program 25d, a threshold value setting program 25e, a first storage controlling program 25f, a displacement obtaining program 25g, a second storage controlling program 25h, or the like.

The image dividing program 25a allows the CPU 21 to function as an image dividing section. Namely, the image dividing program 25a allows the CPU 21 to realize function regarding an image dividing processing, wherein the object image G1 is divided into a plurality of areas (image areas) i, ... based on image data of the object image G1 that are sequentially generated by the image data generating section 1.

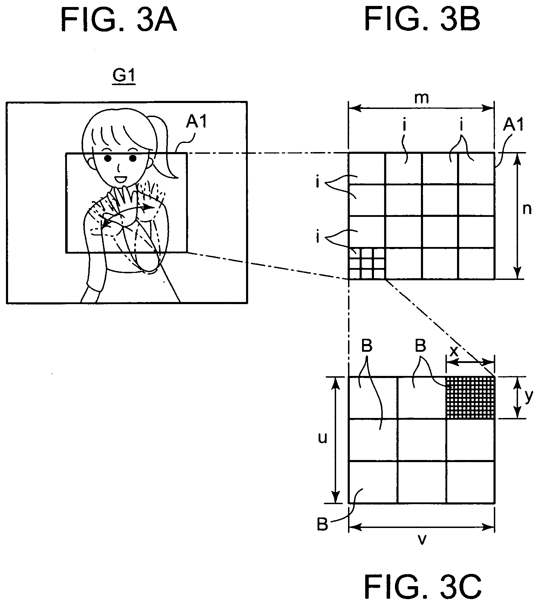

To put it concretely, by executing the dividing program 25a, the CPU 21 divides an image within a predetermined evaluating area A1 of an image frame (image data) among the image frames regarding a plurality of successive object images G1, which are generated by the image data generating section 1 and stored in the memory 22, into a plurality of areas i, ... of m (horizontal direction) times n (vertical direction) (see FIG. 3A and FIG. 3B).

Incidentally, a division number of the evaluating area A1 is exemplary shown in FIG. 3A, wherein m (horizontal direction) is four and n (vertical direction) is three. However, the division number is only an example and is not limited to this. Here, the division number may arbitrarily be set based on a displacement of an image positioned out of the evaluating area A1 at a time when a shutter button is halfway pressed.

Here, a space of the evaluating area A1 is set to become, for example, about 25 percent to a total space of the object image G1. Moreover, the position of the evaluating area A1 is set to become, for example, symmetric in vertical direction and in horizontal direction, while a center of the evaluating area A1 is set in about a central position of the object image G1.

The evaluated value calculating program 25b allows the CPU 21 to function as an evaluated value calculating section (first calculating section). Namely, the evaluated value calculating program 25b allows the CPU 21 to realize function regarding an evaluated value calculating processing, wherein the CPU 21 calculates an evaluated value of the area i by evaluating respective pixel value of each of the pixels included in each of the plurality of areas i, ... divided in the image dividing processing.

To put it concretely, by executing the evaluated value calculating program 25b, the CPU 21 calculates a mean value of the pixel values of each block B (x (horizontal direction) pixel times y (vertical direction) pixel) based on the following formula (1) after dividing each of the plurality of areas i, ... into a plurality of blocks B, ... of v (horizontal direction) times u (vertical direction). That is, the CPU 21 calculates each pixel value p (f, i, j, k) of all of the pixels within each of the plurality of blocks B, ... based on a brightness signal and a color difference signal of each of the pixels as a pixel evaluated value calculating section (third calculating section). Then, the CPU 21 calculates a first mean value b (f, i, j) by averaging the calculated pixel values p (f, i, j, k) of all of the pixels within each of the blocks B, calculates a second mean value by averaging the calculated first mean values p (f, i, j, k) of all of the blocks B, ... within the area i, as the evaluated value of the area i.

$$b(f, i, j) = \frac{\sum_{k=0}^{x \times y} p(f, i, j, k)}{x \times y} \quad \cdots (1)$$

Here, reference numeral 'f' represents number of image frame, reference numeral 'i' represents area number within each of the image frames, reference numeral 'j' represents block number within each of the areas i, ... and reference numeral 'k' represents pixel number within each of the blocks B, ....

Incidentally, although a division number of area i is exemplary shown in FIG. 3B as nine, wherein v (horizontal direction) is three and u (vertical direction) is three, the division number of the area i is only an example and not limited to this. Moreover, although each of the blocks B, ... is composed of twelve pixels (horizontal direction) times ten pixels (vertical direction) as shown in FIG. 3C, the pixel number of the block B is only an example and not limited to this.

The correlation degree calculating program 25c allows the CPU 21 to function as a correlation degree calculating section (second calculating section). Namely, the correlation degree calculating program 25c allows the CPU 21 to realize function regarding a correlation degree calculating processing, wherein the CPU 21 calculates a correlation degree of each of the areas i respectively corresponding to the object images G1 that are sequentially generated by the image data generating section 1 based on the evaluated value (second mean value of the plurality of first mean value b) of each of the areas i calculated in an evaluated value calculating processing.

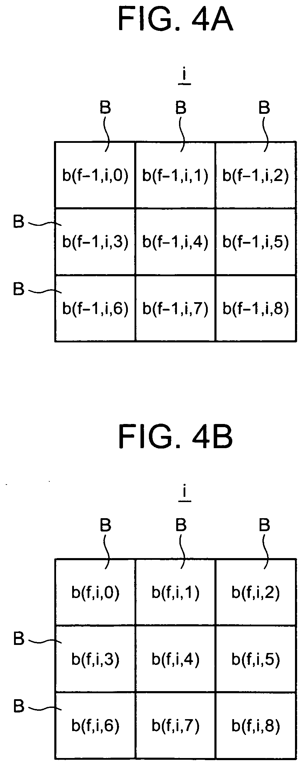

To put it concretely, by executing the correlation degree calculating program 25c, the CPU 21 calculates each correlation degree a (f, i) of the plurality of areas i, ... respectively corresponding to the images of the successive image frames (for example, a previous image frame f-1, a present image frame f) based on the following formula (2). That is, as shown in FIG. 4A and FIG. 4B, the CPU 21 calculates a correlation degree a (f, i) of a predetermined area i by using a first mean value b (f-1, i, j) of each of the blocks B that are positioned in the predetermined area i within the previous image frame f-1 and a first mean value b (f, i, j) of each of the blocks B that are positioned in the predetermined area i within the present image frame f. The first mean values b (f-1, i, j) and b (f, i, j) are calculated in the evaluated value calculating processing.

$$a(f,i) = \frac{\sqrt{\sum_{j=0}^{u \times v} (b(f-1,i,j) \times b(f,i,j))}}{\sqrt{\sum_{j=0}^{u \times v} b(f-1,i,j)^2 \times \sum_{j=0}^{u \times v} b(f,i,j)^2}} \qquad \cdots(2)$$

Here, the correlation degree a (f, i) is defined so that the more closer it is to 1.0, the smaller the movement in the area i of the previous image frame and the present image frame is.

The imaging sensitivity obtaining program 25d allows the CPU 21 to function as an imaging sensitivity obtaining section (second obtaining section). Namely, the imaging sensitivity obtaining program allows the CPU 21 to realize function regarding an imaging sensitivity obtaining processing, wherein the CPU 21 obtains imaging sensitivity of the object image G1 generated by the image data generating section 1.

To put it concretely, by executing the imaging sensitivity obtaining program 25d, the CPU 21 obtains an imaging sensitivity (ISO sensitivity) of the object image G1 based on a brightness of the image frame generated by the image data generating section 1 in a state that the imaging apparatus 100 is set in an automatic sensitivity control mode.

The threshold value setting program 25e allows the CPU 21 to function as a changing section. Namely, the threshold value setting program 25e allows the CPU 21 to realize function regarding a threshold value setting processing, wherein the CPU 21 sets a threshold value Th according to the imaging sensitivity obtained in the imaging sensitivity obtaining processing.

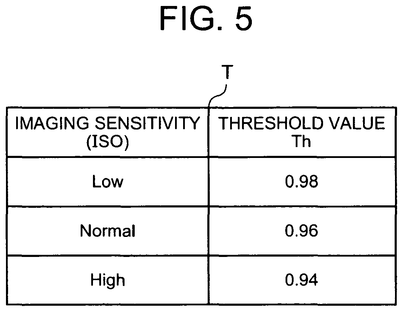

To put it concretely, by executing the threshold value setting program 25e, the CPU 21 refers a table T (see FIG. 5) and set the threshold value Th to 0.98 when the imaging sensitivity obtained in the imaging sensitivity obtaining processing is Low that is less than a predetermined first value. When the imaging sensitivity is Normal that is equal to or more than the predetermined first value and less than a predetermined second value, the CPU 21 sets the threshold value Th to 0.96. When the imaging sensitivity is High that is more than the predetermined second value, the CPU 21 sets the threshold value Th to 0.94.

The first storage controlling program 25f allows the CPU 21 to function as a correlation degree storage controlling section (first controlling section). Namely, the first storage controlling program 25f allows the CPU 21 to realize function regarding a processing for controlling timing for storing image data of the object image G1 (image data to be stored) generated by the image data generating section 1 based on the correlation degree a (f, i) of each of the areas i, wherein the correlation degree is calculated in the correlation degree calculating processing.

To put it concretely, by executing the first storage controlling program 25f, the CPU 21 compares each of the correlation degree a (f, i) of each of the areas i with the predetermined threshold value Th set in the threshold value setting processing. Then, if each correlation degree in all of the areas i is more than the respective predetermined threshold value, that is, the correlation degrees of all of the areas i are almost coincident, the CPU 21 judges that the object is in a state of stopping and causes the image data generating section 1 to obtain (store) the image data of the object image G1 (image data to be stored).

The displacement obtaining program 25g allows the CPU 21 to function as a displacement obtaining section (first obtaining section). Namely, the displacement obtaining program 25g allows the CPU 21 to realize function regarding a displacement obtaining processing, wherein the CPU 21 obtains displacement of the pixels that are positioned out of the evaluating area A1 of the object image G1 between the plurality of successive object images G1.

To put it concretely, by executing the displacement obtaining program 25g, the CPU 21 searches a comparative section (for example, a feature point or the like) of the image positioned out of the evaluating area A1 of an image frame (for example, a previous image frame f-1) in another image frame (for example, a present image frame f) among the successive image frames (for example, the previous image frame f-1, the present image frame f). Then, the CPU 21 calculates (obtains) motion vector of the comparative section between the successive image frames as the displacement.

The second storage controlling program 25h allows the CPU 21 to function as a displacement storage controlling section (second controlling section). Namely, the second storage controlling program 25h allows the CPU 21 to realize function regarding a processing for controlling timing for storing image data of the object image G1 (image data to be stored) generated by the image data generating section 1 based on the motion vector (displacement) of the comparative section, wherein the motion vector is obtained in the displacement obtaining processing.

To put it concretely, by executing the second storage controlling program 25h, the CPU 21 compares the motion vector of the comparative section calculated in the displacement obtaining processing with a predetermined value. Then, the CPU 21 judges whether the object moves between the successive image frames or not, that is, whether the object is in a state of stopping or not, based on the comparison result. If the CPU 21 judges that the object is in a state of stopping (the motion vector is equal to or less than the predetermined value), the CPU 21 causes the image data generating section 1 to obtain (store) the object image G1.

Moreover, the program memory 25 stores the table T for setting threshold values (see FIG. 5), which are used for the threshold value setting processing by the CPU 21.

The imaging sensitivity and the threshold value, which correspond to the imaging sensitivity, are stored in the table T with being associated with each other. To put it concretely, the imaging sensitivity of Low (less than the predetermined first value) is associated with the threshold value Th of 0.98 (degree of coincidence is 98 percent), the imaging sensitivity of Normal (equal to or more than the predetermined first value and less than the predetermined second value) is associated with the threshold value Th of 0.96 (degree of coincidence is 96 percent) and the imaging sensitivity of High (more than the predetermined second value) is associated with the threshold value 0.94 (degree of coincidence is 94 percent).

The image processing section 24 performs a predetermined image processing to the image data generated by the image data generating section 1.

The video output section 23 reads out image data temporarily stored in a predetermined area within the memory 22 and generates RGB signal based on the image data. Then, the video output section 23 outputs the RGB signal to a display section 31 of the user interface 3.

The user interface 3 includes the display section 31, an operating section 32, an external interface 33 and an external storage 34.

The display section 31 displays the object image G1 based on the image data output from the video output section 23. To put it concretely, the display section 31 displays a preview image on live and displays a REC image that is to be stored in the external storage 34.

Incidentally, the display section 31 may include a video memory (not shown) for temporarily store image data for displaying, wherein the image data is arbitrarily output from the video output section 23.

The operating section 32 is a section for a user to perform predetermined operation of the imaging apparatus 100. The operating section 32 outputs an operating signal according to a predetermined operation by a user to the CPU 21. To put it concretely, the operating section 32 includes shutter button, elect and decide button or the like, which are not shown.

The shutter button receives input operation by a user and outputs an instruction signal to the image data generating section 1 to take an image of the object. Moreover, the shutter button is formed to be capable of being pressed in two steps of halfway press operation and fully press operation, and outputs predetermined operation signal, which respectively corresponds to each of the operating steps. To put it concretely, the shutter button outputs an instruction signal to execute an automatic focus processing (AF) and an automatic exposure processing (AE) to the image data generating section 1 when halfway pressed by a user. When fully pressed by a user, the shutter button outputs an instruction signal to the image data generating section 1 to execute storing (saving) the object image G1 generated by the image data generating section 1.

The elect and decide button includes a cursor button (not shown) for electing various items and a decide button (not shown) for entering an item elected based on an operation of the cursor button, or the like.

The external interface 33 is a terminal for connecting with an external device such as a PC, a TV, a projector, or the like. The external interface 33 transmits data through a predetermined communication cable (not shown) or the like.

The external storage 34 stores image data of the object image G1 generated by the image data generating section 1. The external storage 34 is composed of, for example, a card shaped nonvolatile memory (flash memory), a hard disk, or the like.

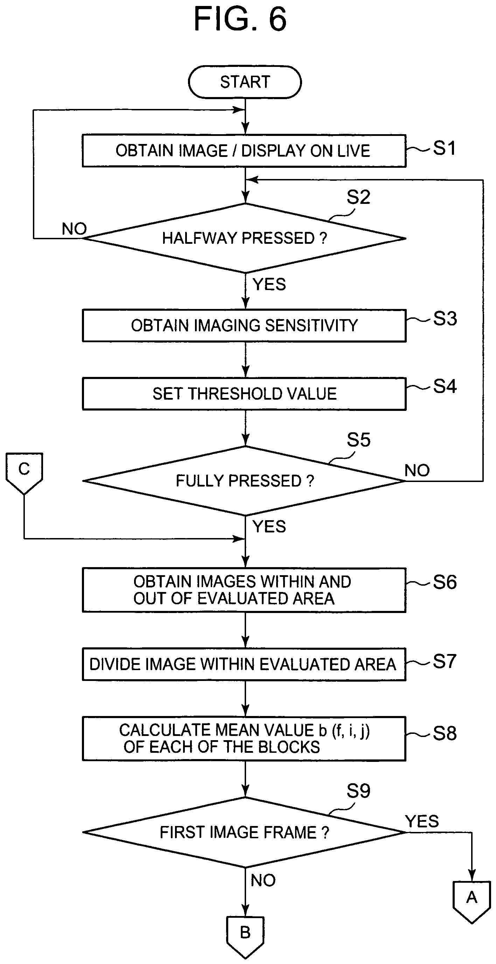

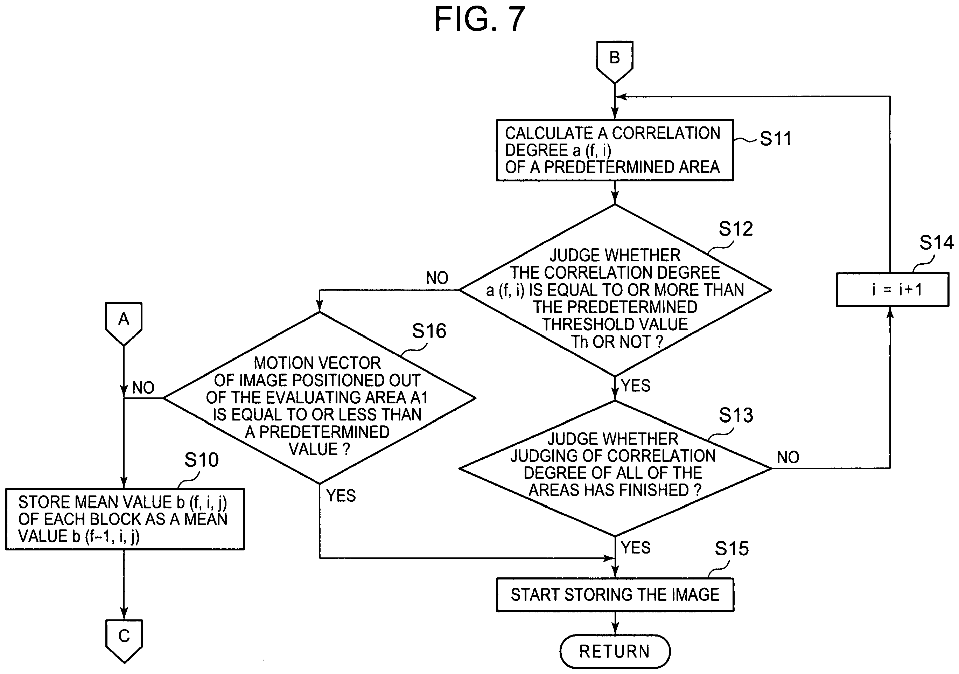

Next, an automatic imaging processing by the imaging apparatus 100 according to the first embodiment of the present invention will be explained with reference to FIG. 6 and FIG. 7.

FIG. 6 and FIG. 7 are flowcharts showing an example of a behavior according to the automatic imaging processing.

Incidentally, in an automatic imaging processing explained bellow, the imaging apparatus 100 is assumed to be preliminarily set to the automatic sensitivity control mode.

As shown in FIG. 6, when the image data generating section 1 starts taking images of the object, the video output section 23 generates an RGB signal based on the image data generated by the image data generating section 1. Then, the video output section 23 outputs the RGB signal to the display section 31 of the user interface to display an image on the display section 31 on live (step S1).

Next, the CPU 21 judges whether the shutter button is halfway pressed by a user or not (step S2). If the CPU 21 judges that the shutter button is halfway pressed (step S2; YES), the CPU 21 executes the imaging sensitivity obtaining program 25d stored in the program memory 25 and obtains imaging sensitivity (ISO sensitivity) of the object image G1 based on a brightness of an image frame generated by the image data generating section 1 (step S3).

Subsequently, the CPU 21 executes the threshold value setting program 25e stored in the program memory 25 and refers the table T (see FIG. 5) for setting threshold value so as to set a predetermined threshold value Th based on the imaging sensitivity obtained in the imaging sensitivity obtaining processing (step S4).

Incidentally, if the CPU 21 judges that the shutter button is not halfway pressed (step S2; NO), the CPU 21 returns the automatic imaging processing to step S1.

Next, the CPU 21 judges whether the shutter button is fully pressed by a user or not (step S5). If the CPU 21 judges that the shutter button is fully pressed (step S5; YES), the CPU 21 obtains image positioned in and out of the evaluating area A1 of an image frame generated by the image data generating section 1 (step S6).

Incidentally, if the CPU 21 judges that the shutter button is not fully pressed (step S5; No), the CPU 21 returns the automatic imaging processing to Step S2.

Next, the CPU 21 executes the image dividing program 25a stored in the program memory 25 and divides image positioned within the evaluating area A1 into a plurality of areas i, ... of m (horizontal direction) times n (vertical direction) (step S7; see FIG. 3A and FIG. 3B). Subsequently, the CPU 21 executes the evaluated value calculating program 25b stored in the program memory 25 and divides each of the plurality of areas i, ... into a plurality of blocks B, ...of v (horizontal direction) times u (vertical direction). Then, the CPU 21 calculates each pixel value p (f, i, j, k) of all of the pixels within each of the plurality of blocks B, ... based on the formula (1). Then, the CPU 21 calculates a mean value b (f, i, j) by averaging the pixel values p (f, i, j, k) of all of the pixels within each of the blocks B (step S8).

$$b(f,i,j) = \frac{\sum_{k=0}^{x \times y} p(f,i,j,k)}{x \times y} \quad \cdots (1)$$

Next, the CPU 21 judges whether the image frame about which the CPU 21 calculates the mean value b (f, i, j) of each block B in step S8 is a first image frame or not (step S9) .

Here, if the CPU 21 judges that the image frame is a first image frame (step S7; YES), the CPU 21 temporarily stores the mean value b (f, i, j) of each block B as a mean value b (f-1, i, j) in the memory 22 as shown in FIG. 7 (step S10). Then, the CPU 21 shifts the processing to step S6 to obtain an image of a next image frame.

On the other hand, if the CPU 21 judges in step S9 that the image frame is not a first image frame (step S9; NO), the CPU 21 executes, as shown in FIG. 7, the correlation degree calculating program 25c stored in the program memory 25. Then, the CPU 21 calculates a correlation degree a (f, i) of predetermined areas i respectively corresponding to the images-of the successive image frames based on the formula (2) by using the mean value b (f-1, i, j) of each of the blocks B that are positioned in the predetermined area i within the previous image frame f-1 and a mean value b (f, i, j) of each of the blocks B that are positioned in the predetermined area i within the present image frame f (step S11).

$$a(f,i) = \frac{\sqrt{\sum_{j=0}^{u \times v} (b(f-1,i,j) \times b(f,i,j))}}{\sqrt{\sum_{j=0}^{u \times v} b(f-1,i,j)^2 \times \sum_{j=0}^{u \times v} b(f,i,j)^2}} \quad \cdots (2)$$

Subsequently, the CPU 21 executes the first storage controlling program 25f stored in the program memory 25. Then, the CPU 21 compares the correlation degree a (f, i) of each of the areas i calculated in the correlation degree calculating processing with the predetermined threshold value Th set in the threshold value setting processing, and judges whether the correlation degree a (f, i) is equal to or more than the predetermined threshold value Th or not (step S12). If the CPU 21 judges that the correlation degree a (f, i) is equal to or more than the predetermined threshold value (step S12; YES), the CPU 21 judges whether judging of correlation degree of all of the areas i within the evaluating area A1 has finished or not (step S13).

Here, if the CPU 21 judges that the judging of a correlation degree a (f, i) of all of the areas i has not been finished (step S13; NO), the CPU 21 shifts the processing to step S11 with incrementing the number of the area i regarding the judging of correlation degree thereof as i=i+1 and calculates a correlation degree a (f, i+1) about next area i (i+1) (step S14).

On the other hand, if the CPU 21 judges that the judging of a correlation degree a (f, i) of all of the areas i has finished (step S13; YES), the CPU 21 judges that all correlation degrees of all of the areas i are respectively equal to or more than the predetermined threshold value Th (i.e. correlation degrees of all of the areas i are almost the same value, and the CPU 21 judges that the object is in a state of stopping). Then, the CPU 21 starts storing the image data of the object image G1 (step S15).

Incidentally, the object image G1 to be stored in step S15 may be a static image of one image frame or a plurality of successive image frames or may be a moving image.

Moreover, if the CPU 21 judges that the correlation degree a (f, i) is less than the predetermined threshold value Th (step S12; NO), the CPU 21 judges whether the motion vector of the image positioned out of the evaluating area A1 is equal to or less than a predetermined value or not (step S16).

A specific behavior of the imaging apparatus 100 in step S16 is as follows.

The CPU 21 executes the displacement obtaining program 25g stored in the program memory 25 and searches a comparative section of the image positioned out of the evaluating area A1 of a previous image frame f-1 in a present image frame f among the successive image frames. Then, the CPU 21 calculates motion vector of the comparative section between the successive image frames as a displacement.

Subsequently, the CPU 21 executes the second storage controlling program 25h stored in the program memory 25 and compares the motion vector of the comparative section calculated in the displacement obtaining processing with a predetermined value. Then, the CPU 21 judges whether the object moves between the successive image frames or not, based on the comparison result, that is, the CPU 21 judges whether the object is in a state of stopping or not. If the CPU 21 judges that the motion vector is equal to or less than the predetermined value (i.e. the object is in a state of stopping) (step S16; YES), the CPU 21 shifts the processing to step S15 and stores the object image G1 taken by the image data generating section 1.

Incidentally, if the CPU 21 judges that the motion vector is more than the predetermined value (i.e. the object is not in a state of stopping) (step S16; NO), the CPU 21 shifts the processing to step S10.

As described above, according to the first embodiment, the imaging apparatus 100 evaluates all pixel values that are calculated based on the brightness and color difference of each pixel included in each of the plurality of blocks B of the area i so as to calculate the mean value b (f, i, j) to calculate the evaluated value of the plurality of areas i, ... , which are generated by dividing the evaluating area A1 of the object image G1. Then, the imaging apparatus 100 calculates the correlation degree a (f, i) of each of the areas i respectively corresponding to the images of the object images G1 on the basis of the mean value b (f, i, j) of each pixels included in each of the areas i of the plurality of object images G1. Then, the imaging apparatus 100 controls storing the object image G1 by judging the stopping state of the object based on the correlation degree a (f, i) of each of the areas i. Consequently, judging of whether the object is in a state of stopping or not can be adequately performed excluding an effect of a slight motion of the object.

To put it concretely, as shown in FIG. 3A, when automatically shooting a person swinging his/her arm as the object, the imaging apparatus 100 adequately judges whether the object is in a state of stopping or not excluding the effect of the "arm swing" by judging the stopping state of the object on the basis of correlation degree a (f, i) of each of the areas i of the evaluating area A1 of the object image G1, as described in this embodiment. Moreover, if the "arm swing" becomes small to the evaluating area A1, the imaging apparatus 100 adequately detects a moving section by dividing the evaluating area A1 into the plurality of areas i, ....

Therefore, the imaging apparatus 100 can control an imaging in the automatic imaging processing with considering a motion of the object.

Moreover, regarding the comparative section of the image out of the evaluating area A1 of the object image G1, the imaging apparatus 100 obtains motion vector between a plurality of object images G1 and controls storing the object image G1 by judging the stopping state of the object based on the motion vector of the comparative section. Therefore, the imaging apparatus 100 can judge the stopping state of the object more adequately based on not only the correlation degree a (f, i) of each of the areas i within the evaluating areas A1 respectively corresponding to the images of the object images G1, but also motion vector of the pixels in the image positioned out of the evaluating area A1.

Further, the imaging apparatus 100 compares correlation degree a (f, i) of each of the areas i with the predetermined threshold value Th and judges that the object is in a state of stopping when each of the correlation degree of all of the areas i is respectively equal to or more than the predetermined threshold value Th. Therefore, the imaging apparatus 100 can adequately judge the stopping state of the object.

In this bout, the threshold value Th can be set according to the imaging sensitivity at a time of taking the object image G1 by the image data generating section 1. Therefore, judgment condition as to whether the object is in a state of stopping or not can be set to severe or lax, and the imaging apparatus 100 can judge the stopping state of the object more adequately.

Incidentally, although the space of the evaluating area A1 is set to be 25 percent of the total space of the object image G1 in the above first embodiment, the space of the evaluating area A1 is not limited to this and can be voluntarily and arbitrarily changed. That is, the space of the evaluating area A1 can be input by a user based on a predetermined operation of the operating section 32, and can be set by the CPU 21.

The operating section 32 and the CPU 21 configure a predetermined area specifying section (a specifying section) for specifying space of a predetermined evaluating area A1.

Here, if the wider the evaluating area A1 is set, the more accurately the judgment of stopping state of the object can be performed. However, the setting causes the CPU 21 to slow down a processing speed because the amount of calculation increases. Therefore, it is preferable that the space of the evaluating area A1 is arbitrarily set considering a viewpoint of an accuracy of the judgment of stopping state of the object and an improvement of the processing speed, or the like.

Moreover, although the position of the evaluating area A1 is set so as to become symmetric in vertical direction and in horizontal direction, while a center of the evaluating area A1 is set in about a central position of the object image G1, the position is not limited to this and can be changed arbitrarily. That is, the position of the evaluating area A1 can be input by a user based on a predetermined operation of the operating section 32, and can be set by the CPU 21. Here, the operating section 32 and the CPU 21 configure a predetermined area specifying section (a specifying section) for specifying position of the predetermined evaluating area A1.

Additionally, although the judgment of the stopping state of the object is set to be performed based on not only the correlation degree a (f, i) of the image within the evaluating area A1 of the object image G1 but also a displacement of the pixels of an image positioned out of the evaluating area A1, whether the CPU 21 judges the stopping state of the object based on the displacement of pixels in an image positioned out of the evaluating area A1 or not is not limited to this and can be arbitrarily changed.

Furthermore, although the imaging apparatus 100 is set to store the object image G1 generated by the image data generating section 1 when the correlation degree a (f, i) of all areas i are more than the predetermined threshold value Th, it is not limited to this. That is, not all of the correlation degree a (f, i) is necessary to be more than the predetermined threshold value Th, if only whether the object is in a state of stopping or not can be properly judged. Namely, the imaging apparatus 100 can be set to store the object image G1 generated by the image data generating section 1 when correlation degree a (f, i) is more than the predetermined threshold value Th in a predetermined number of areas i among the plurality of areas i.

Moreover, although the judgment of correlation degree of an image within the evaluating area A1 is applied to the imaging apparatus 100, which automatically shoots when the object is in a state of stopping in the above mentioned first embodiment, the judgment can be applied to an imaging apparatus, which can judge camera shakes when taking images in a state of being handheld. In this case, by comparing the correlation degree a (f, i) of each of the areas i with a predetermined threshold value Th, an alarm representing arising of camera shake can be informed to a user when the correlation degree a (f, i) is less than the predetermined threshold value Th.

Second embodiment

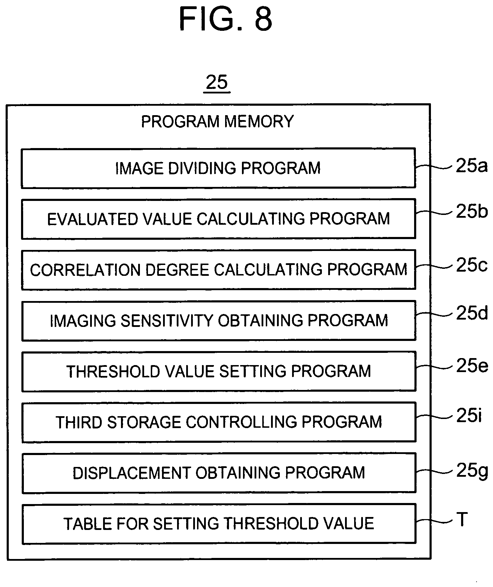

Hereinafter, an imaging apparatus 200 according to a second embodiment of the present invention will be described with reference to the FIGS. 8 to 11.

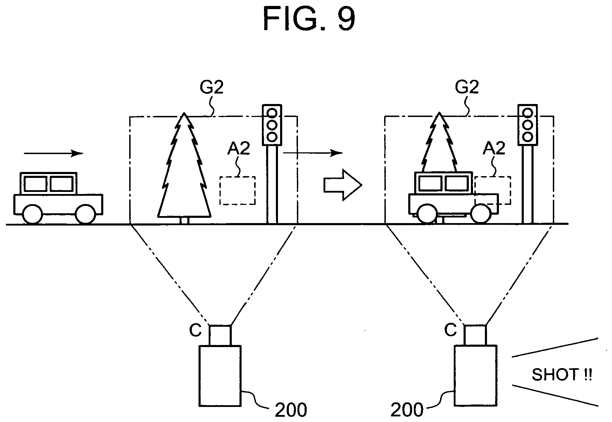

The imaging apparatus 200 according to the second embodiment judges a moment that a particular object such as, for example, an automobile (see FIG. 9) enters into an arbitrary judging area A2, which is preliminary set within an object image G2, based on a correlation degree a (f, i) of each of the areas i, and controls storing the object image G2.

Incidentally, the imaging apparatus 200 according to the second embodiment is same as the above mentioned imaging apparatus 100 of the first embodiment excluding a configuration regarding a controlling for storing the object image G2. Therefore, same signs are applied to the same component, and the explanation thereof will be omitted.

As shown in FIG. 8, the program memory 25 stores a third storage controlling program 25i in addition to the above mentioned image dividing program 25a, the evaluated value calculating program 25b, the correlation degree calculating program 25c, the imaging sensitivity obtaining program 25d, the threshold value setting program 25e, and the displacement obtaining program 25g of the first embodiment.

The third storage controlling program 25i allows the CPU 21 to function as a correlation degree storage controlling section (first controlling section). Namely, the third storage controlling program 25i allows the CPU 21 to realize function regarding a processing for controlling timing for storing an image data of the object image G2 (image data to be stored) generated by the image data generating section 1 based on the correlation degree a (f, i) of each of the areas i within the judging area A2 regarding automatic imaging, wherein the correlation degree is calculated in the correlation degree calculating processing.

To put it concretely, by executing the third storage controlling program 25i, the CPU 21 compares each of the correlation degree a (f, i) of the plurality of areas i, ... within the judging area A2 with a predetermined threshold value Th set in the threshold value setting processing. Then, if a correlation degree a (f, i) of any one area i is less than the predetermined threshold value Th, the CPU 21 judges that the particular object enters into the judging area A2 and a state of the object changes from a stopping state to a changing state. Then, the CPU 21 controls the image data generating section 1 to obtain (store) the object image G2.

Here, the position or the space of the judging area A2 can arbitrarily be changed. That is, the position or the space of the judging area A2 can be input by a user based on a predetermined operation of the operating section 32, and can be set by the CPU 21. Here, the operating section 32 and the CPU 21 configure a predetermined area specifying section (a specifying section) for specifying any one of position or space of the predetermined judging area A2.

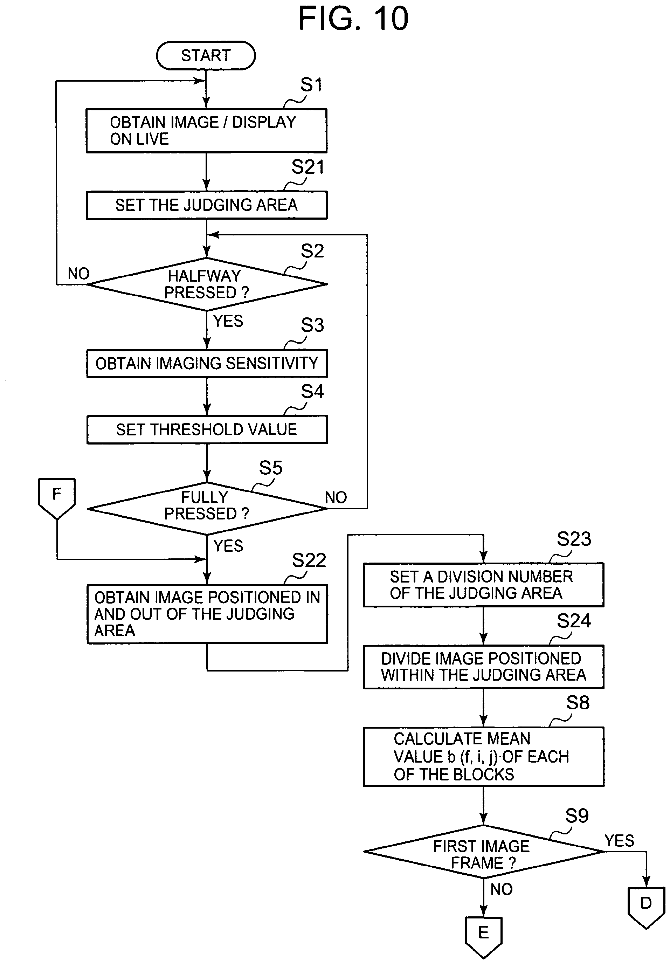

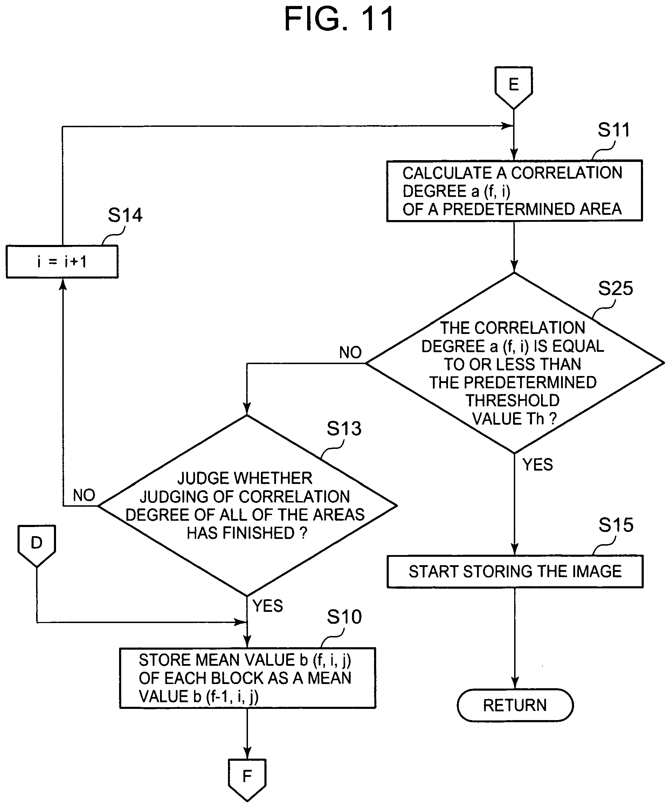

Next, an automatic imaging processing by the imaging apparatus 200 according to the second embodiment of the present invention will be explained with reference to FIG. 10 and FIG. 11.

FIG. 10 and FIG. 11 are flowcharts showing an example of a behavior according to the automatic imaging processing.

Incidentally, the automatic imaging processing explained below is a processing partially changed from the automatic imaging processing by the imaging apparatus 100 of the first embodiment. Therefore, the same explanations will be omitted.

As shown in FIG. 10 and FIG. 11, when imaging of the object by the image data generating section 1 is started, the video output section 23 generates an RGB signal based on the image data generated by the image data generating section 1, and displays image on the display 31 on live (step S1).

Then, if a position or a space of the judging area A2 is input based on a predetermined operation of the operating section 32 by a user, the CPU 21 sets the input position or the input space of the judging area A2 (step S21) .

Then, the CPU 21 executes step S2 to step S4. If the CPU 21 judges that the shutter button is fully pressed (step S5; YES), the CPU 21 obtains image positioned in and out of the judging area A2 of an image frame (image data) generated by the image data generating section 1 (step S22).

Incidentally, if the CPU 21 judges that the shutter button is not fully pressed (step S5; No), the CPU 21 returns the automatic imaging processing to Step S2.

Subsequently, the CPU 21 executes the image dividing program 25a stored in the program memory 25, sets a division number based on the space or the position of the judging area A2 (step S23), and divides image positioned within the judging area A2 into a plurality of areas i, ... of m (horizontal direction) times n (vertical direction) (step S24).

Then, after calculating a correlation degree a (f, i) of successive image frames of the predetermined area i within the judging area A2, the CPU 21 executes the third storage controlling program 25i stored in the program memory 25 and compares the correlation degree a (f, i) of the predetermined area i calculated in the correlation degree calculating processing with a predetermined threshold value Th set in the threshold value setting processing. The CPU 21 judges whether the correlation degree a (f, i) is equal to or less than the predetermined threshold value Th (step S25). If the CPU 21 judges that the correlation degree a (f, i) is less than the predetermined threshold value Th (step S25; YES), the CPU 21 judges that a particular object enters into the judging area A2 and the state of the object changes from stopping state to a changing state and store the object image G2 generated by the image data generating section 1 (step S15).

On the other hand, if the CPU 21 judges that the correlation degree a (f, i) is not less than the predetermined threshold value Th (step S25; NO), the CPU 21 judges whether the judging for all correlation degrees a (f, i) of all of the areas i of the image within the judging area A2 has finished or not (step S13).

If the CPU 21 judges that the judging for all correlation degrees a (f, i) of all of the areas i has not finished (step S13; NO), the CPU 21 shifts the automatic imaging processing to step S14.

On the other hand, if the CPU 21 judges that the judging for all correlation degrees a (f, i) has finished (step S13; YES), the CPU 21 shifts the automatic imaging processing to step S10.

As described above, according to the second embodiment, the imaging apparatus 200 calculates the correlation degree a (f, i) of each of the areas i respectively corresponding to the images of object images G2 on the basis of the mean value of each pixels included in each of the areas i of the plurality of object images G2. Therefore, the imaging apparatus 200 can properly judge whether the state of the object changes from a stopping state to a changing state by judging the moment when particular object enters into the arbitrary judging area A2 based on the correlation degree a (f, i) of each of the areas i.

Moreover, if a particular object, which is small to the judging area A2, passes through a part of the judging area A2, the imaging apparatus 200 adequately detects the particular object by dividing the judging area A2 into the plurality of areas i, ....

Therefore, the imaging apparatus 100 can control an imaging considering a motion of the object in the automatic imaging processing.

Incidentally, although the imaging apparatus 200 is set to store the object image G2 generated by the image data generating section 1 when any one of the correlation degree a (f, i) of the plurality of areas i is less than the predetermined threshold value Th, it is not limited to this. That is, the imaging apparatus 200 can be set to store the object image G2 generated by the image data generating section 1 when more than two correlation degrees a (f, i) are less than the predetermined threshold value Th in a predetermined number of areas i among the plurality of areas i in judging whether the state of the object is changed from a stopping state to a changing state.

Third embodiment

In the following, a third embodiment of the present invention will be explained.

The imaging apparatus according to the third embodiment substitutes a following formula (3) for the formula (1) and substitutes a following formula (4) for the formula (2) in the evaluated value calculating processing of the above mentioned first and second embodiment.

Incidentally, the imaging apparatus according to the third embodiment is same as the above mentioned first and second embodiment excluding formulas regarding an evaluated value calculating processing and a correlation degree calculating processing. Therefore, the explanations thereof will be omitted.

As same as the above mentioned first and second embodiments, the program memory 25 stores the evaluated value calculating program 25b and the correlation degree calculating program 25c.

By executing the evaluated value calculating program 25b, the CPU 21 calculates a mean value of the pixel value of each block B (x (horizontal direction) pixel times y (vertical direction) pixel) based on the following formula (3), after dividing each of the plurality of areas i, ... into a plurality of blocks B, ... of v (horizontal direction) times u (vertical direction). That is, the CPU 21 calculates each pixel value p (f, i, j, k) of all of the pixels within each of the plurality of blocks B, ... based on a brightness signal and a color difference signal of each of the pixels as an image evaluated value calculating section (third calculating section). Then, the CPU 21 calculates a first mean value b (f, i, j) by averaging the calculated pixel values p (f, i, j, k) of all of the pixels within each of the blocks B and averages the first mean values b (f, i, j) of all of the plurality of blocks B, ... within each of the areas i to calculate a second mean value as the evaluated value of the area i.

$$b(f,i,j) = \frac{\sum_{k=0}^{x \times y - 1} p(f,i,j,k)}{x \times y} \quad \cdots(3)$$

Here, reference numeral 'f' represents number of image frame, reference numeral 'i' represents area number within each of the image frames, reference numeral 'j' represents block number within each of the areas i, ... and reference numeral 'k' represents pixel number within each of the blocks B, ....

As described above, by using the formula (3), the evaluated value calculating program 25b allows the CPU 21 to realize function regarding the evaluated value calculating processing, wherein the CPU 21 calculates an evaluated value of the area i by evaluating respective pixel value of each of the plurality of areas i, ... divided in the image dividing processing.

Moreover, by executing the correlation degree calculating program 25c, the CPU 21 calculates each correlation degree a (f, i) of the plurality of areas i, ... respectively corresponding to the images of the successive image frames (for example, a previous image frame f-1, a present image frame f) based on the following formula (4). That is, the CPU 21 calculates a correlation degree a (f, i) of a predetermined area i by using a mean value b (f-1, i, j) of each of the blocks B that are positioned in the predetermined area i within the previous image frame f-1 and a mean value b (f, i, j) of each of the blocks B that are positioned in the predetermined area i within the present image frame f. The mean values b (f-1, i, j) and b (f, i, j) are calculated in the evaluated value calculating processing.

$$a(f,i) = \frac{\sum_{j=0}^{u \times v - 1} (b(f-1,i,j) \times b(f,i,j))}{\sqrt{\sum_{j=0}^{u \times v - 1} b(f-1,i,j)^2} \times \sqrt{\sum_{j=0}^{u \times v - 1} b(f,i,j)^2}} \quad \cdots(4)$$

Here, the correlation degree a (f, i) is defined so that the more closer it is to 1.0, the smaller the movement in the area i between the previous image frame and the present image frame is.

As described above, by using the formula (4), the correlation degree calculating program 25c allows the CPU 21 to realize function regarding a correlation degree calculating processing, wherein the CPU 21 calculates a correlation degree of each of the areas i respectively corresponding to the images of the plurality of object images G1 that are sequentially generated by the image data generating section 1 based on the evaluated value (second mean value of the plurality of first mean value b, ...) of each of the areas i calculated in an evaluated value calculating processing.

According to the third embodiment, as same as the first and the second embodiment, the imaging apparatus evaluates all pixel values that are calculated based on the brightness and color difference of each pixel included in each of the plurality of blocks B of the area i so as to calculates the first mean value b (f, i, j) to obtain the evaluated value of the plurality of areas i, ... , which are generated by dividing the evaluating area A1 of the object image G1 (the judging area A2 of the object image G2) by using the formula (3). That is, whether the formula (3) is applied or the formula (1) of the first and second embodiment is applied to the evaluated value calculating processing can be arbitrarily changed. The imaging apparatus can adequately calculate the evaluated value of each of the areas i by using either of the formulas.

Moreover, the imaging apparatus can calculate the correlation degree a (f, i) of each of the areas i respectively corresponding to the object images G1 (the object images G2) on the basis of the mean value b (f, i, j) of each pixels included in each of the areas i of the plurality of object images G1 (object images G2). That is, whether the formula (4) is applied or the formula (2) of the first and second embodiment is applied to the correlation degree calculating processing can be arbitrarily changed. The imaging apparatus can adequately calculate the correlation degree of each of the areas i respectively corresponding to the images of the object images G1 (object images G2) by using either of the formulas.

Therefore, by using the formula (3) or (4), the imaging apparatus can control an imaging considering a motion of the object in the automatic imaging processing, as same as the first and the second embodiment.

Moreover, the present invention is not limited to the first, second and third embodiment, and can be modified or changed within the scope of the present invention.

For example, although the threshold value for judging the correlation degree a (f, i) is set according to an imaging sensitivity, which is automatically set, in the first, second and third embodiment, the threshold value Th is not limited to this and can be arbitrarily set by a user. That is, the threshold value can be arbitrarily input by a user based on a predetermined operation of the operating section 32, and can be set by the CPU 21. Here, the operating section 32 and the CPU 21 configure a reference value setting section (a setting section) for arbitrarily setting the threshold value Th.

Moreover, although the threshold value Th for judging the correlation degree a (f, i) is set based on an imaging sensitivity in the first, second and third embodiment, the threshold value Th is not limited to this and can be set based on a shutter speed as substitute for the imaging sensitivity. That is, the threshold value Th can be set corresponding to a shutter speed, which is set based on an operation of the shutter button as being pressed halfway, within a range of not causing a camera shake.

Additionally, the threshold value Th can be set in the second embodiment based on a displacement of the image frame of the plurality of object images G2, which are generated in a state without any particular object in the judging area A2.

Moreover, although the imaging apparatus of the first, second or third embodiment calculates all pixel values of all of the pixels of each of the blocks B of each of the areas i within the evaluating area A1 or the judging area A2, and calculates the mean value b (f, i, j) of all of the pixel values as the evaluated value of each of the areas i, it is not limited to this. That is, not all of the mean value b (f, i, j) of all of the pixels of each of the blocks B of each of the areas i within the evaluating area A1 or the judging area A2 is necessary to be calculated. For example, pixel values of a predetermined proportion of pixels among all of the pixels of each of the blocks B of each of the areas i within the evaluating area A1 or the judging area A2 may be calculated, and the mean value thereof can be applied as an evaluated value of each of the areas i.

Moreover, although the pixel value of each of the pixels of each of the areas i is calculated based on the brightness and color difference of each of the pixels in the first, second and third embodiment, the pixel value is not limited to this. That is, the pixel value can be calculated based on components other than the brightness or the color differences.

Moreover, although judging of the correlation degree a (f, i) of the plurality of areas i, ... is done, in the first, second and third embodiment, by using an image of a predetermined area such as the object image G1 or the object image G2, i.e. image within the evaluating area A1 or the judging area A2, it is not limited to this. That is, the judging of the correlation degree a (f, i) of the plurality of areas i, ... can be done by using total area of the object image G1 or G2.

Moreover, the configuration of the imaging apparatus 100, 200 shown in the first, second or third embodiment is only an example, which should not be limited thereto.

Additionally, although the image dividing section, the evaluated value calculating section, the correlation degree calculating section, the correlation degree storage controlling section, the reference value setting section, the imaging sensitivity obtaining section, the reference value changing section, the pixel evaluated value calculating section, the predetermined area specifying section, the displacement obtaining section and the displacement storage controlling section are realized by the CPU 21 executing a predetermined programs or the like in the first, second and third embodiment, it is not limited to this. That is, the sections may be composed of, for example, logic circuits for realizing various functions.

**Claims**

**1.** An imaging apparatus, comprising:

an imaging section (1) configured to sequentially take an image of an object and sequentially generate image data of the object;

a dividing section (21) configured to divide the image data of the object into image data corresponding to each of a plurality of image areas;

a first calculating section (21) configured to calculate an evaluated value of each of the divided plurality of image areas by evaluating respective pixel values of each of the pixels included in each of the divided plurality of image areas and configured to calculate a mean value of the pixel values based on a brightness and color difference of each of the pixels included in each of the image areas;

a second calculating section (21) configured to calculate a correlation degree of each of the image areas respectively corresponding to the successively-generated images based on the evaluated value of each of the image areas calculated by the first calculating section;

a first obtaining section configured to obtain an imaging sensitivity of the image data of the object based on a brightness of the image data of the object;

a threshold value setting section (21) configured to set a reference value based on the imaging sensitivity obtained by the first obtaining section; and

a controlling section (21) configured to compare the correlation degree of each of the image areas calculated by the second calculating section with the reference value and configured to control execution of storing the image data of the object based on the comparison of the correlation degree of each of the image areas calculated by the second calculating section with the reference value.

**2.** The imaging apparatus according to claim 1, wherein
the controlling section (21) is configured to store the image data of the object if the correlation degree is more than the reference value with respect to the predetermined number of image areas.

**3.** The imaging apparatus according to claim 2, further comprising:

a second obtaining section configured to obtain displacement of a pixel, which is positioned out of a predetermined area of the image corresponding to the image data of the object, between the successively-generated images, by calculating a motion vector of the pixel positioned out of a predetermined area of the image between successively-generated images; and

the controlling section (21) is configured to control execution of storing the image data of the object based on the displacement obtained by the second obtaining section.

**4.** The imaging apparatus according to claim 1, wherein
the controlling section (21) is configured to store the image data of the object if the correlation degree is less than the reference value with respect to the predetermined number of image areas.

**5.** The imaging apparatus according to any one of claims 2 to 4, further comprising:
a setting section configured to arbitrarily set the reference value.

**6.** The imaging apparatus according to any one of claims 1 to 4, wherein the first obtaining section includes a shutter speed obtaining section configured to obtain a shutter speed set in the imaging section.

**7.** The imaging apparatus according to any one of claims 1 to 6, wherein
the dividing section (21) is configured to divide image data of a predetermined range of the image corresponding to the image data of the object sequentially generated by the imaging section into image data corresponding to each of a plurality of image areas.

**8.** The imaging apparatus according to claim 7, further comprising:
a specifying section (21, 32) configured to specify at least any one of a position or an area of the predetermined range to be divided by the dividing section.

**9.** A storage medium storing computer readable program, which causes an imaging apparatus according to claims 1-8 to realize following sections:

a dividing section (21) configured to divide image data of an object into image data corresponding to each of a plurality of image areas;

a first calculating section (21) configured to calculate an evaluated value of each of the divided plurality of image areas by evaluating respective pixel values of each of the pixels included in each of the divided plurality of image areas and configured to calculate a mean value of the pixel values based on a brightness and color difference of each of the pixels included in each of the image areas;

a second calculating section (21) configured to calculate a correlation degree of each of the image areas respectively corresponding to the successively-generated images based on the evaluated value of each of the image areas calculated by the first calculating section;

a first obtaining section configured to obtain an imaging sensitivity of the image data of the object based on a brightness of the image data of the object;

a threshold value setting section (21) configured to set a reference value based on the imaging sensitivity obtained by the first obtaining section; and

a controlling section (21) configured to compare the correlation degree of each of the image areas calculated by the second calculating section with the reference value and configured to control execution of storing the image data of the object based on the comparison of the correlation degree of each of the image areas calculated by the second calculating section with the reference value.

10. A method including an imaging apparatus having an imaging section for sequentially generating image data of an object by sequentially taking an image of the object, comprising:

a dividing step for dividing the image data of the object into image data corresponding to each of a plurality of image areas;

a first calculating step for calculating an evaluated value of each of the divided plurality of image areas by evaluating respective pixel values of each of the pixels included in each of the divided plurality of image areas and for calculating a mean value of the pixel values based on a brightness and color difference of each of the pixels included in each of the image areas;

a second calculating step for calculating a correlation degree of each of the image areas respectively corresponding to the successively-generated images based on the evaluated value of each of the image areas calculated in the first calculating step;

an obtaining step for obtaining an imaging sensitivity of the image data of the object based on a brightness of the image data of the object;

a setting step for setting a reference value based on the imaging sensitivity obtained by the obtaining step; and

a controlling step for comparing the correlation degree of each of the image areas calculated in the second calculating step with the reference value and for controlling execution of storing the image data of the object based on the comparison of the correlation degree of each of the image areas calculated in the second calculating step with the reference value.

**Patentansprüche**

1. Abbildungsvorrichtung, die umfasst:

einen Abbildungsabschnitt (1), der konfiguriert ist, um ein Objekt aufeinander folgend aufzunehmen und um Bilddaten des Objektes aufeinander folgend zu erzeugen;

einen Teilungsabschnitt (21), der konfiguriert ist, um die Bilddaten des Objektes in Bilddaten zu teilen, die jedem aus einer Vielzahl von Bildbereichen entsprechen;

einen ersten Berechnungsabschnitt (21), der konfiguriert ist, um einen beurteilten Wert von jedem aus der geteilten Vielzahl von Bildbereichen durch Beurteilen jeweiliger Pixelwerte von jedem der Pixel zu berechnen, die in jeder aus der geteilten Vielzahl von Bildbereichen enthalten und konfiguriert sind, um einen Mittelwert der Pixelwerte auf der Basis einer Helligkeits- und Farbdifferenz von jedem aus der in jedem der Bildbereiche enthaltenen Pixel zu berechnen;

einen zweiten Berechnungsabschnitt (21), der konfiguriert ist, um einen Korrelationsgrad von jedem der Bildbereiche, die jeweils den erfolgreich erzeugten Bildern entsprechen, auf der Basis des beurteilten Wertes von jedem der durch den ersten Berechnungsabschnitt berechneten Bildbereiche zu berechnen;

einen ersten Abrufungsabschnitt, der konfiguriert ist, um eine Abbildungsempfindlichkeit der Bilddaten des Objektes auf der Basis einer Helligkeit der Bilddaten des Objektes abzurufen;

einen Schwellenwerteinstellabschnitt (21), der konfiguriert ist, um einen Bezugswert auf der Basis der durch den Abrufungsabschnitt abgerufenen Abbildungsempfindlichkeit einzustellen; und

einen Steuerabschnitt (21), der konfiguriert ist, um den Korrelationsgrad von jedem der durch den zweiten Berechnungsabschnitt berechneten Bildbereiche mit dem Bezugswert zu vergleichen, und konfiguriert ist, um die Ausführung des Speicherns der Bilddaten des Objektes auf der Basis des Vergleiches des Korrelationsgrades von jedem der durch den zweiten Berechnungsabschnitt berechneten Bildbereiche mit dem Bezugswert zu steuern.

2.  Abbildungsvorrichtung nach Anspruch 1, wobei
    der Steuerabschnitt (21) konfiguriert ist, um die Bilddaten des Objektes zu speichern, wenn der Korrelationsgrad größer als der Bezugswert hinsichtlich der vorgegebenen Anzahl von Bildbereichen ist.

3.  Abbildungsvorrichtung nach Anspruch 2, die des Weiteren umfasst:

    einen zweiten Abrufungsabschnitt, der konfiguriert ist, um eine Verschiebung eines Pixels abzurufen, das außerhalb eines vorgegebenen Bereiches des Bildes entsprechend den Bilddaten des Objektes zwischen den erfolgreich erzeugten Bildern positioniert ist, indem ein Bewegungsvektor des außerhalb eines vorgegebenen Bereiches des Bildes zwischen erfolgreich erzeugten Bildern positionierten Pixels berechnet wird; und
    einen Steuerabschnitt (21), der konfiguriert ist, um die Ausführung des Speicherns der Bilddaten des Objektes auf der Basis der durch den zweiten Abrufungsabschnitt abgerufen Verschiebung zu steuern.

4.  Abbildungsvorrichtung nach Anspruch 1, wobei
    der Steuerabschnitt (21) konfiguriert ist, um die Bilddaten des Objektes zu speichern, wenn der Korrelationsgrad kleiner als der vorgegebene Bezugswert hinsichtlich der vorgegebenen Anzahl von Bildbereichen ist.

5.  Abbildungsvorrichtung nach einem der Ansprüche 2 bis 4, die des Weiteren umfasst:
    einen Einstellabschnitt, der konfiguriert ist, um den Bezugswert beliebig einzustellen.

6.  Abbildungsvorrichtung nach einem der Ansprüche 1 bis 4, wobei der erste Abrufungsabschnitt einen Abrufungsabschnitt für die Verschlussgeschwindigkeit aufweist, der konfiguriert ist, um eine in dem Abbildungsabschnitt eingestellte Verschlussgeschwindigkeit abzurufen.

7.  Abbildungsvorrichtung nach einem der Ansprüche 1 bis 6, wobei
    der Teilungsabschnitt (21) konfiguriert ist, um Bilddaten eines vorgegebenen Bereiches des Bildes entsprechend den durch den Abbildungsabschnitt aufeinander folgend erzeugten Bilddaten des Objektes in Bilddaten zu teilen, die jedem aus der Vielzahl von Bildbereichen entsprechen.

8.  Abbildungsvorrichtung nach Anspruch 7, die des Weiteren umfasst:
    einen Spezifizierungsabschnitt (21, 32), der konfiguriert ist, um wenigstens eine Position oder einen Bereich des vorgegebenen Bereiches zu spezifizieren, der durch den Teilungsabschnitt zu teilen ist.

9.  Speichermedium, das ein computerlesbares Programm speichert, das eine Abbildungsvorrichtung nach einem der Ansprüche 1 bis 8 folgende Abschnitte realisieren lässt:

    einen Teilungsabschnitt (21), der konfiguriert ist, um Bilddaten eines Objektes in Bilddaten zu teilen, die jedem aus einer Vielzahl von Bildbereichen entsprechen;
    einen ersten Berechnungsabschnitt (21), der konfiguriert ist, um einen beurteilten Wert von jedem aus der geteilten Vielzahl von Bildbereichen durch Beurteilen von jeweiligen Pixelwerten von jedem der Pixel zu berechnen, die in jeder der geteilten Vielzahl von Bildbereichen enthalten und konfiguriert sind, um einen Mittelwert der Pixelwerte auf der Basis einer Helligkeits- und Farbdifferenz von jedem der in jedem der Bildbereiche enthaltenen Pixel zu berechnen;
    einen zweiten Berechnungsabschnitt (21), der konfiguriert ist, um einen Korrelationsgrad von jedem der Bildbereiche, die jeweils den erfolgreich erzeugten Bildern entsprechen, auf der Basis des beurteilten Wertes von jedem der Bildbereiche zu berechnen, der durch den ersten Berechnungsabschnitt berechnet wurde;
    einen ersten Abrufungsabschnitt, der konfiguriert ist, um eine Abbildungsempfindlichkeit der Bilddaten des Objektes auf der Basis einer Helligkeit der Bilddaten des Objektes abzurufen;
    einen Schwellenwerteinstellabschnitt (21), der konfiguriert ist, um einen Bezugswert auf der Basis der durch den Abrufungsabschnitt abgerufenen Abbildungsempfindlichkeit einzustellen; und
    einen Steuerabschnitt (21), der konfiguriert ist, um den Korrelationsgrad von jedem der durch den zweiten Berechnungsabschnitt berechneten Bildbereiche mit dem Bezugswert zu vergleichen, und konfiguriert ist, um die Ausführung des Speicherns der Bilddaten des Objektes auf der Basis des Vergleiches des Korrelationsgrades von jedem der durch den zweiten Berechnungsabschnitt berechneten Bildbereiche mit dem Bezugswert zu steuern.

10. Verfahren, das eine Abbildungsvorrichtung mit einem Abbildungsabschnitt zum aufeinander folgenden Erzeugen von Bilddaten eines Objektes durch aufeinander folgendes Aufnehmen eines Bildes des Objektes aufweist, das umfasst:

einen Teilungsschritt zum Teilen der Bilddaten des Objektes in Bilddaten, die jedem aus der Vielzahl von mehreren Bildbereichen entsprechen;

einen ersten Berechnungsschritt zum Berechnen eines beurteilten Wertes von jedem aus der geteilten Vielzahl von Bildbereichen durch Beurteilen jeweiliger Pixelwerte von jedem der in jeder der unterteilten Vielzahl von Bildbereichen enthaltenen Pixel und zum Berechnen eines Mittelwertes der Pixelwerte auf der Basis einer Helligkeits- und Farbdifferenz von jedem der in den Bildbereichen enthaltenen Pixel;

einen zweiten Berechnungsschritt zum Berechnen eines Korrelationsgrades von jedem der Bildbereiche, die jeweils den erfolgreich erzeugten Bildern entsprechen, auf der Basis des beurteilten Wertes von jedem der in dem ersten Berechnungsschritt berechneten Bildbereiche;

einen Abrufungsschritt zum Abrufen einer Abbildungsempfindlichkeit der Bilddaten des Objektes auf der Basis einer Helligkeit der Bilddaten des Objektes;

einen Einstellungsschritt (21) zum Einstellen eines Bezugswertes auf der Basis der durch den Abrufungsabschnitt abgerufen Abbildungsempfindlichkeit und

einen Steuerschritt zum Vergleichen des Korrelationsgrades von jedem der in dem zweiten Berechnungsschritt berechneten Bildbereiche mit dem Bezugswert und zum Steuern der Ausführung des Speicherns der Bilddaten des Objektes auf der Basis des Vergleiches des Korrelationsgrades von jedem der in dem zweiten Berechnungsschritt berechneten Bildbereiche mit dem Bezugswert.

## Revendications

1. Appareil de formation d'images, comprenant :

une section de formation d'images (1) conçue pour prendre séquentiellement une image d'un objet et générer séquentiellement des données d'image de l'objet ;

une section de division (21) conçue pour diviser les données d'image de l'objet en données d'image correspondant à chacune d'une pluralité de zones d'image ;

une première section de calcul (21) conçue pour calculer une valeur évaluée de chacune de la pluralité divisée de zones d'image en évaluant les valeurs de pixel respectives de chacun des pixels inclus dans chacune de la pluralité divisée de zones d'image, et conçue pour calculer une valeur moyenne des valeurs de pixel sur la base d'une différence de luminosité et de couleur de chacun des pixels inclus dans chacune des zones d'image ;

une seconde section de calcul (21) conçue pour calculer un degré de corrélation de chacune des zones d'image correspondant respectivement aux images successivement générées sur la base de la valeur évaluée de chacune des zones d'image calculée par la première section de calcul ;

une première section de détermination conçue pour déterminer une sensibilité de formation d'image des données d'image de l'objet sur la base d'une luminosité des données d'image de l'objet ;

une section de fixation d'une valeur seuil (21) conçue pour fixer une valeur de référence sur la base de la sensibilité de formation d'image déterminée par la première section de détermination ; et

une section de commande (21) conçue pour comparer le degré de corrélation de chacune des zones d'image calculé par la seconde section de calcul avec la valeur de référence, et conçue pour commander l'exécution de l'enregistrement des données d'image de l'objet sur la base de la comparaison du degré de corrélation de chacune des zones d'image calculé par la seconde section de calcul avec la valeur de référence.

2. Appareil de formation d'images selon la revendication 1, dans lequel
la section de commande (21) est conçue pour enregistrer les données d'image de l'objet si le degré de corrélation est supérieur à la valeur de référence par rapport au nombre prédéterminé de zones d'image.

3. Appareil de formation d'images selon la revendication 2, comprenant, en outre :

une seconde section de détermination conçue pour déterminer un déplacement d'un pixel, qui est positionné en dehors d'une zone prédéterminée de l'image correspondant aux données d'image de l'objet, entre les images successivement générées en calculant un vecteur de mouvement du pixel positionné en dehors d'une zone prédéterminée de l'image entre des images successivement générées ; et
la section de commande (21) est conçue pour commander l'exécution de l'enregistrement des données d'image
de l'objet sur la base du déplacement déterminé par la seconde section de détermination.

**4.** Appareil de formation d'images selon la revendication 1, dans lequel
la section de commande (21) est conçue pour enregistrer les données d'image de l'objet si le degré de corrélation
est inférieur à la valeur de référence par rapport au nombre prédéterminé de zones d'image.

**5.** Appareil de formation d'images selon l'une quelconque des revendications 2 à 4, comprenant, en outre :
une section de fixation conçue pour fixer arbitrairement la valeur de référence.

**6.** Appareil de formation d'images selon l'une quelconque des revendications 1 à 4, dans lequel la première section
de détermination comprend une section de détermination de vitesse d'obturation conçue pour déterminer une vitesse
d'obturation fixée dans la section de formation d'images.

**7.** Appareil de formation d'images selon l'une quelconque des revendications 1 à 6, dans lequel
la section de division (21) est conçue pour diviser des données d'image d'une étendue prédéterminée de l'image
correspondant aux données d'image de l'objet générées séquentiellement par la section de formation d'images en
données d'image correspondant à chacune d'une pluralité de zones d'image.

**8.** Appareil de formation d'images selon la revendication 7, comprenant, en outre :
une section de spécification (21, 32) conçue pour spécifier au moins une position et/ou une zone de l'étendue
prédéterminée devant être divisée par la section de division.

**9.** Support d'enregistrement sur lequel est enregistré un programme lisible par ordinateur qui fait exécuter par un
appareil de formation d'images selon les revendications 1-8 les sections suivantes :

une section de division (21) conçue pour diviser des données d'image d'un objet en données d'image correspondant à chacune d'une pluralité de zones d'image ;
une première section de calcul (21) conçue pour calculer une valeur évaluée de chacune de la pluralité divisée
de zones d'image en évaluant les valeurs de pixel respectives de chacun des pixels inclus dans chacune de
la pluralité divisée de zones d'image, et conçue pour calculer une valeur moyenne des valeurs de pixel sur la
base d'une différence de luminosité et de couleur de chacun des pixels inclus dans chacune des zones d'image ;
une seconde section de calcul (21) conçue pour calculer un degré de corrélation de chacune des zones d'image
correspondant respectivement aux images successivement générées sur la base de la valeur évaluée de
chacune des zones d'image calculée par la première section de calcul ;
une première section de détermination conçue pour déterminer une sensibilité de formation d'image des données
d'image de l'objet sur la base d'une luminosité des données d'image de l'objet ;
une section de fixation d'une valeur seuil (21) conçue pour fixer une valeur de référence sur la base de la
sensibilité de formation d'image déterminée par la première section de détermination ; et
une section de commande (21) conçue pour comparer le degré de corrélation de chacune des zones d'image
calculé par la seconde section de calcul avec la valeur de référence, et conçue pour commander l'exécution
de l'enregistrement des données d'image de l'objet sur la base de la comparaison du degré de corrélation de
chacune des zones d'image calculé par la seconde section de calcul avec la valeur de référence.

**10.** Procédé incluant un appareil de formation d'images comprenant une section de formation d'images permettant de
générer séquentiellement des données d'image d'un objet en prenant séquentiellement une image de l'objet,
comprenant :

une étape de division permettant de diviser les données d'image de l'objet en données d'image correspondant
à chacune d'une pluralité de zones d'image ;
une première étape de calcul permettant de calculer une valeur évaluée de chacune de la pluralité divisée de
zones d'image en évaluant les valeurs de pixel respectives de chacun des pixels inclus dans chacune de la
pluralité divisée de zones d'image, et permettant de calculer une valeur moyenne des valeurs de pixel sur la
base d'une différence de luminosité et de couleur de chacun des pixels inclus dans chacune des zones d'image ;
une seconde étape de calcul permettant de calculer un degré de corrélation de chacune des zones d'image
correspondant respectivement aux images successivement générées sur la base de la valeur évaluée de
chacune des zones d'image calculée dans la première étape de calcul ;

**17**

une étape de détermination permettant de déterminer une sensibilité de formation d'image des données d'image de l'objet sur la base d'une luminosité des données d'image de l'objet ;

une étape de fixation permettant de fixer une valeur de référence sur la base de la sensibilité de formation d'image déterminée dans l'étape de détermination ; et

une étape de commande permettant de comparer le degré de corrélation de chacune des zones d'image calculé dans la seconde étape de calcul avec la valeur de référence, et permettant de commander l'exécution de l'enregistrement des données d'image de l'objet sur la base de la comparaison du degré de corrélation de chacune des zones d'image calculé dans la seconde étape de calcul avec la valeur de référence.

# FIG. 1

<u>100</u>

# FIG. 2

<u>25</u>

| PROGRAM MEMORY |
|---|
| IMAGE DIVIDING PROGRAM |
| EVALUATED VALUE CALCULATING PROGRAM |
| CORRELATION DEGREE CALCULATING PROGRAM |
| IMAGING SENSITIVITY OBTAINING PROGRAM |
| THRESHOLD VALUE SETTING PROGRAM |
| FIRST STORAGE CONTROLLING PROGRAM |
| DISPLACEMENT OBTAINING PROGRAM |
| SECOND STORAGE CONTROLLING PROGRAM |
| TABLE FOR SETTING THRESHOLD VALUE |

25a
25b
25c
25d
25e
25f
25g
25h
T

# FIG. 3A

## FIG. 3B

G1

A1

m

i    i

A1

i

n

i

B    B

x

u

y

v

B

# FIG. 3C

# FIG. 4A

$\underline{i}$

|   |   |   |
|---|---|---|
| b(f−1,i,0) | b(f−1,i,1) | b(f−1,i,2) |
| b(f−1,i,3) | b(f−1,i,4) | b(f−1,i,5) |
| b(f−1,i,6) | b(f−1,i,7) | b(f−1,i,8) |

# FIG. 4B

$\underline{i}$

|   |   |   |
|---|---|---|
| b(f,i,0) | b(f,i,1) | b(f,i,2) |
| b(f,i,3) | b(f,i,4) | b(f,i,5) |
| b(f,i,6) | b(f,i,7) | b(f,i,8) |

# FIG. 5

T

| IMAGING SENSITIVITY (ISO) | THRESHOLD VALUE Th |
|---|---|
| Low | 0.98 |
| Normal | 0.96 |
| High | 0.94 |

# FIG. 6

```
            ( START )
                |
                v
+------------------------------------+
| OBTAIN IMAGE / DISPLAY ON LIVE     |  ~S1
+------------------------------------+
                |
                v
              S2
    NO  < HALFWAY PRESSED ? >
         |           |
         |          YES
         |           |
         |           v
         |  +--------------------------+
         |  | OBTAIN IMAGING SENSITIVITY|  ~S3
         |  +--------------------------+
         |           |
         |           v
         |  +--------------------------+
         |  | SET THRESHOLD VALUE      |  ~S4
         |  +--------------------------+
         |           |
         |           v
         |        S5
   C --->    < FULLY PRESSED ? >   NO
                   |
                  YES
                   |
                   v
       +------------------------------+
       | OBTAIN IMAGES WITHIN AND     |  ~S6
       | OUT OF EVALUATED AREA        |
       +------------------------------+
                   |
                   v
       +------------------------------+
       | DIVIDE IMAGE WITHIN EVALUATED AREA |  ~S7
       +------------------------------+
                   |
                   v
       +------------------------------+
       | CALCULATE MEAN VALUE b (f, i, j) |  ~S8
       | OF EACH OF THE BLOCKS        |
       +------------------------------+
                   |
                   v
                 S9
       < FIRST IMAGE FRAME ? >   YES
                   |              |
                  NO              |
                   |              v
                   v            ( A )
                 ( B )
```

# FIG. 7

START STORING THE IMAGE → RETURN

CALCULATE A CORRELATION DEGREE a (f, i) OF A PREDETERMINED AREA — S11

JUDGE WHETHER THE CORRELATION DEGREE a (f, i) IS EQUAL TO OR MORE THAN THE PREDETERMINED THRESHOLD VALUE Th OR NOT ? S12

i = i+1 — S14

MOTION VECTOR OF IMAGE POSITIONED OUT OF THE EVALUATING AREA A1 IS EQUAL TO OR LESS THAN A PREDETERMINED VALUE ? S16

JUDGE WHETHER JUDGING OF CORRELATION DEGREE OF ALL OF THE AREAS HAS FINISHED ? S13

STORE MEAN VALUE b (f, i, j) OF EACH BLOCK AS A MEAN VALUE b (f-1, i, j) — S10

START STORING THE IMAGE — S15

EP 2 088 768 B1

# FIG. 8

<u>25</u>

| PROGRAM MEMORY |
|---|
| IMAGE DIVIDING PROGRAM |
| EVALUATED VALUE CALCULATING PROGRAM |
| CORRELATION DEGREE CALCULATING PROGRAM |
| IMAGING SENSITIVITY OBTAINING PROGRAM |
| THRESHOLD VALUE SETTING PROGRAM |
| THIRD STORAGE CONTROLLING PROGRAM |
| DISPLACEMENT OBTAINING PROGRAM |
| TABLE FOR SETTING THRESHOLD VALUE |

25a
25b
25c
25d
25e
25i
25g
T

# FIG. 9

# FIG. 10

```
                    START

                      │
                      ▼                    S1
           ┌────────────────────────┐
           │ OBTAIN IMAGE / DISPLAY │
           │ ON LIVE                │
           └────────────────────────┘
                      │                    S21
                      ▼
           ┌────────────────────────┐
           │ SET THE JUDGING AREA   │
           └────────────────────────┘
                      │
                      ▼                    S2
      NO  ◇───────────────────────◇
          │    HALFWAY             │
          │    PRESSED ?           │
           ◇───────────────────────◇
                      │ YES              S3
                      ▼
           ┌────────────────────────┐
           │ OBTAIN IMAGING SENSITIVITY │
           └────────────────────────┘
                      │                    S4
                      ▼
           ┌────────────────────────┐
           │ SET THRESHOLD VALUE    │
           └────────────────────────┘
                      │                    S5
                      ▼
      (F)  ◇───────────────────────◇  NO
          │    FULLY               │
          │    PRESSED ?           │
           ◇───────────────────────◇
                      │ YES              S22
                      ▼
           ┌────────────────────────┐
           │ OBTAIN IMAGE POSITIONED IN │
           │ AND OUT OF THE JUDGING │
           │ AREA                   │
           └────────────────────────┘
```

S23
┌──────────────────────────┐
│ SET A DIVISION NUMBER    │
│ OF THE JUDGING AREA      │
└──────────────────────────┘
             │          S24
             ▼
┌──────────────────────────┐
│ DIVIDE IMAGE POSITIONED  │
│ WITHIN THE JUDGING AREA  │
└──────────────────────────┘
             │          S8
             ▼
┌──────────────────────────┐
│ CALCULATE MEAN           │
│ VALUE b (f, i, j) OF EACH │
│ OF THE BLOCKS            │
└──────────────────────────┘
             │          S9
             ▼
   ◇───────────────────◇  YES
   │  FIRST IMAGE      │
   │  FRAME ?          │
   ◇───────────────────◇
             │ NO
             ▼
            (E)        (D)

# FIG. 11

E

**S11**

CALCULATE A CORRELATION
DEGREE a (f, i)
OF A PREDETERMINED AREA

**S25**

THE CORRELATION
DEGREE a (f, i) IS EQUAL
TO OR LESS THAN
THE PREDETERMINED
THRESHOLD
VALUE Th ?

NO

YES

**S14**

i = i+1

NO

**S13**

JUDGE WHETHER
JUDGING OF CORRELATION
DEGREE OF ALL OF THE AREAS
HAS FINISHED ?

D

YES

**S10**

STORE MEAN VALUE b (f, i, j)
OF EACH BLOCK AS A MEAN
VALUE b (f-1, i, j)

**S15**

START STORING THE IMAGE

RETURN

F

**EP 2 088 768 B1**

**REFERENCES CITED IN THE DESCRIPTION**

**Patent documents cited in the description**

- US 20030151672 A1
- WO 2007004207 A2
- JP 2007213191 A
- EP 1874043 A1